Europäisches Patentamt

European Patent Office

Office européen des brevets

(19)

(11) Veröffentlichungsnummer : **0 041 154 B1**

(12) **EUROPÄISCHE PATENTSCHRIFT**

(45) Veröffentlichungstag der Patentschrift :
07.12.83

(21) Anmeldenummer : **81103595.5**

(22) Anmeldetag : **11.05.81**

(51) Int. Cl.³ : **B 29 C 17/02**

(54) **Formschablone.**

(30) Priorität : **03.06.80 DE 3020922**

(43) Veröffentlichungstag der Anmeldung :
**09.12.81 Patentblatt 81/49**

(45) Bekanntmachung des Hinweises auf die Patenterteilung : **07.12.83 Patentblatt 83/49**

(84) Benannte Vertragsstaaten :
**AT BE CH DE FR GB IT LI NL SE**

(56) Entgegenhaltungen :
**BE-A- 634 525
DE-A- 2 109 417
DE-A- 2 445 716
FR-A- 1 199 812
FR-A- 2 111 967
FR-A- 2 211 334
GB-A- 1 126 131
US-A- 1 351 472
US-A- 3 068 782**

(73) Patentinhaber : **Maschinen Witte KG
Zum Schoppenbusch 15،
D-4517 Hilter a. T. W. (DE)**

(72) Erfinder : **Witte, Karl-Heinz
Zum Schoppenbusch 15
D-4517 Hilter a. T. W. (DE)**

(74) Vertreter : **Busse & Busse Patentanwälte
Postfach 1226 Grosshandelsring 6
D-4500 Osnabrück (DE)**

EP 0 041 154 B1

## Formschablone

Die Erfindung betrifft eine Formschablone nach dem Oberbegriff des Anspruchs 1 sowie ein Verfahren nach dem Oberbegriff des Anspruchs 13.

Kunststoffhohlprofile für Fensterrahmen haben eine weite Verbreiterung gefunden, wobei die üblicherweise geraden Fenstereinfassungen und Rahmen die Verwendung der verschiedenen, von Haus aus geraden Kunststoff-Spezialprofile für solche Zwecke erleichtert hat. Die Vorteile der mittlerweise hochentwickelten Profilkonstruktionen haben aber auch den Bedarf an bogenförmigen Profilstücken für besondere Gestaltungen, insbesondere jedoch für die Altbausanierung aufkommen lassen. Solche Bögen herzustellen, ist grundsätzlich bereits seit langem möglich, insbesondere nach einem neueren Verfahren, bei dem die vorgeformenden Profile in eine Spezial-Flüssigkeit getaucht und auf eine vorgegebene Temperatur von z. B. 120 °C erhitzt werden. Die Profile sind danach überaus leicht und gleichmäßig verformbar.

Der herkömmliche Verformungsvorgang ist allerdings mit Schwierigkeiten behaftet. Beim Biegen von Profilabschnitten über eine Schablone oder innerhalb einer solchen treten bisweilen Stauchwellen oder Stauchfalten längs der innenliegenden Bogenbereiche auf, wobei auch die Eigentümlichkeiten der Profile besonders zu berücksichtigen ist. Ferner tritt bei solchen besonderen Bögen der relativ hohe Arbeitsaufwand für die Erstellung von Schablonen kostentreibend und zeitaufwendig in Erscheinung, da geänderte Bogenformen regelmäßig neue Schablonen, zumindest jedoch abschnittsweise durch Aneinanderstückeln veränderte Schablonen verlangen, welch letztere dann auch zu mangelhaften Produkten beitragen können. Diese Probleme, die bei der Herstellung von Fenstern akzentuiert auftreten, gelten grundsätzlich jedoch nicht nur für diese, sondern generell für die Formgebung komplizierterer Kunststoff-Profile.

Aufgabe der Erfindung ist es, die Umformung gerader Kunststoffprofile zu Bögen einfacher und sicherer sowie insbesondere hinsichtlich unterschiedlicher Bögen flexibler zu gestalten, um damit bessere und preisgünstigere Profile zu erzielen.

Gemäß der Erfindung wird diese Aufgabe mit einer Formschablone gemäß dem Anspruch 1 sowie mit einem Verfahren nach dem Anspruch 14 gelöst.

Die mit Hilfe von biegsamen Führungsschienen gebildete Schablone erlaubt es nicht nur in ohne weiteres verständlicher Wiese durch mehr oder weniger starkes Verbiegen, sei es elastischer, sei es plastischer Art, die Krümmung der Formschablone zu verändern und damit eine schnelle Umstellung auf neu vorgegebene Radien oder Formen zu bewerkstelligen, versuchsweise Muster- oder Probebögen herzustellen oder aber auch bei etwa nachträglich festzustellenden Rückformungen des Kunststoffs solchen entgegenwirkende Korrekturen in der Form vorzunehmen, was immer dann mit äußerst geringem Arbeits- und Zeitaufwand erfolgen kann. Die so gestaltete Form bietet auch eine lückenlose Abstützung des zumindest anfangs relativ weichen Formstücks und zwar insbesondere in den besonders kritischen Innen- und Außenbereichen und damit gute Vorraussetzungen für ein von Arbeitsmarken und Unregelmäßigkeiten nicht oder nicht störend beeinflußtes Produkt.

Insbesondere hat sich jedoch durch die Ausbildung der Schablone mit Hilfe von Führungsschienen gezeigt, daß das Werkstück in Längsrichtung durch die Schablone gezogen werden kann, was nicht nur einen stetigen und wohlkontrollierten Formgebungsablauf bewirkt, sondern sich insbesondere als wirksam zur Vermeidung von Stauchwellen und Stauchfalten erwiesen hat. Bei dieser Art der Formgebung hat sich gezeigt, daß die herkömmlich zumindest zum Teil auftretende Gefahr von Stauchwellen und Stauchfalten beseitigt ist und daß statt dessen ein in seiner Querschnittsform gleichmäßiges und in seiner Oberfläche glattes Profil nach dem jeweiligen Abhärtungsvorgang der Schablone entnommen werden kann. In einer vorteilhaften Ausgestaltung nach dem Anspruch 2 wird die Möglichkeit geschaffen, mit einem Ziehwerkzeug von der Seite her in die Form hinein zu gelangen und auf diese Weise, der Form mit dem Ziehwerkzeug in Längsrichtung folgend, ein kopfseitig erfaßtes Profilstück in die Formschablone einzuziehen.

Eine besondere vorteilhafte Formschablone gemäß dem Anspruch 3 erlaubt es, ein überaus festes und steifes oder zähes Material für die Schablonenteile zu verwenden, wie es etwa mit Polyäthylen, insbesondere mit ultrahochmolekularem Niederdruck-Polyäthylen gegeben ist, ohne dabei Einschränkungen hinsichtlich der leichten Krümmungsänderungen machen zu müssen. Mit durchlaufenden Rückenbereichen läßt sich die Biegefestigkeit eines solchen Materials nutzen und dessen Eigenschaft als Gleitwerkstoff aufrecht-erhalten, gleichwohl aber die gewünschte Verformbarkeit erreichen. Bei den sich ausschließlich im Rückenbereich der Schablonenteile ergebenden Verformung bleibt die Querschnittsform unbeeinträchtigt, insbesondere verhindern die vom Rand einspringenden Ausnehmungen krümmungsbedingte Materialverlagerungen, die die Querschnittsform der Schablone beeinträchtigen müßten.

Weitere Merkmale und Vorteile der Erfindung ergeben sich aus den Ansprüchen und der nachfolgenden Beschreibung, in der ein Ausführungsbeispiel der Erfindung anhand der Zeichnung näher erläutert ist. In der Zeichnung zeigen :

Figur 1 eine perspektivische (Teil-) Ansicht einer Formschablone,

Figur 2 einen Querschnitt durch zwei Schablonenteile der Formschablone gemäß Fig. 1 mit zwischenliegendem Profilstück,

Figur 3 perspektivische (Teil-) Ansicht einer gegenüber der der Fig. 1 abgewandelten Schablone,

Figur 4 einen Querschnitt durch die Formschablone gemäß Fig. 3 mit zwischenliegendem Profilstück und

Figur 5 einen Querschnitt durch eine weitere Formschablone.

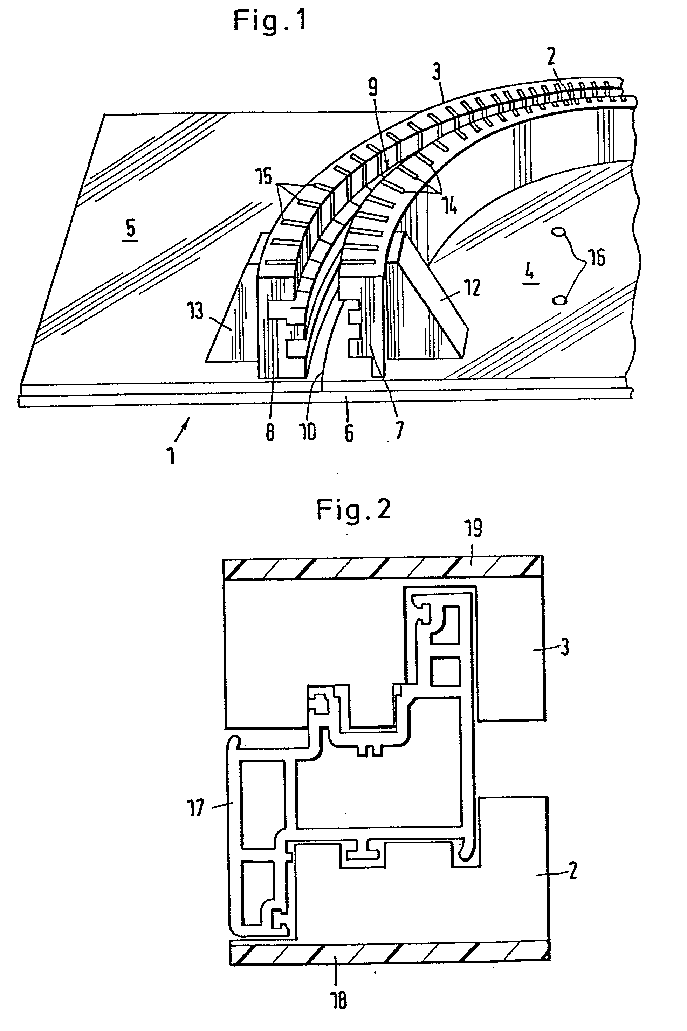

Die in Fig. 1 in einem abgebrochenen Teilstück dargestellte, insgesamt mit 1 bezeichnete Formschablone weist zwei Schablonenteile, nämlich ein Innenteil 2 und Außenteil 3 auf, die jeweils auf einer Montageplatte 4 bzw. 5 befestigt sind, wobei die Montageplatten wiederum auf einer gemeinsamen Führungsplatte 6 liegen.

Die beiden Schablonenteile 2, 3 bestehen jeweils aus einem Formstrang aus hochmolekularem Niederdruck-Polyäthylen, einem Werkstoff, der wegen seiner Kerbschlachtzähigkeit, Biegefestigkeit und seiner Eigenschaft als Gleitwerkstoff bekannt und auch für die vorliegende Anwendung beispiel-haft ist. Es versteht sich natürlich, daß verschiedene andere Werkstoffe mit einer ausreichenden Biegefestigkeit und mit ausreichenden Gleiteigenschaften Verwendung finden können, wobei auch die Beständigkeit gegen Temperaturen von bis zu 120 °C, gegen Feuchtigkeit und besondere chemische Mittel zu berücksichtigen sind.

Die Querschnittsform der Schablonenteile, die außenseitig im allgemeinen unkritisch zu wählen ist, wird im Innenbereich durch die Form des zu verformenden Kunststoffprofils bestimmt, an dem die Profilteile mit geringem Spiel anliegen sollen. Dementsprechend zeigen die Stirnflächen 7 und 8 der Schablonenteile 2 und 3 an den einander zugewandten Kanten eine komplexe, dem in Betracht gezogenen Kunststoffprofil angepaßte Form. Diese angepaßten Profilbereiche liegen auf der Innenseite bzw. Außenseite des herzustellenden Bogens. Zwischen diesen halten die Schablonenteile 2 und 3 zueinander auch außenseitig Abstände ein, so daß keine insgesamt geschlossene Form entsteht. Auf der an die Montageplatten 4 und 5 angrenzenden Seite der Schablonenteile 2 und 3 ist es zunächst einmal eine Frage der Einsparung an Formmaterial, daß hier die Montageplatten selbst den Abschluß bilden können. Weiterhin ist die Zugänglichkeit der Innenform auch auf diese Weise vorteilhaft berücksichtigt. Auf der den Montageplatten abgewandten Seite der Schablonenteile 2 und 3 ist ein gleichbleibender freier Spalt 9 belassen, durch den hindurch es möglich ist, mit einem Werkzeug, etwa einem zangenartigen Werkzeug in die Form hineinzureichen und damit ein zwischen die Stirnseiten 7 und 8 der Schablonenteile 2 und 3 kopfseitig eingeführtes (vorher erweichtes) Kunststoffprofilstück der Länge nach einzuziehen. Es versteht sich, daß auch ein der Bogenform von der Endseite her folgendes Zugwerkzeug eingesetzt und dann ein geschlossener Schablonenquerschnitt vorgesehen werden könnte, doch hat sich diese Schablonenform und diese Art des Einziehens als besonders einfach und überschaubar dargestellt.

Die besondere Art der Formgebung, bei der das erweichte Kunststoff-Profilstück in Längsrichtung in die Schablone eingezogen wird, ist nicht nur gut überschaubar, da während des Formvorgangs keine Verstellungen der Schablone vorgenommen zu werden brauchen, wie etwa bei im Sinne eines Biegevorgangs beidseitig gegen einen Formling zusammengefahrenen Schablonenteil herkömmlicher Art. Dieser Formvorgang hat sich auch als überraschend wirksam erwiesen, Falten- und Wellenbildungen infolge von verformungsbedingten Materialverlagerungen zu vermeiden. Wellen und Falten, wie sie bei herkömmlichen Formschablonen und Arbeitsverfahren immer wieder zu befürchten waren, haben sich hier nicht eingestellt, was zum einen der gleitenden, gleichförmigen Einführung in die Form und zum anderen einer leichten Streckung des gesamten Formlings zuzurechnen sein mag.

Das im erweichten Zustand verformte Profilstück bleibt nach dem einzigen zwischen die Schablonenteile 2 und 3 üblicherweise für einen zur Vermeidung von Rückbildungen ausreichenden Zeitraum, z. B. von 5 Minuten, in der Schablone 1 und wird dann entnommen. Da die Schablonenteile 2 und 3 auf verschiedenen Montageplatten 4 und 5 angeordnet sind, lassen sie sich auseinanderbewegen, was in der Zeichnung durch eine Stoßfuge 10 und die gemeinsame Auflagerung auf einer Führungsplatte 6 veranschaulicht ist. Es versteht sich, daß hier in konstruktiver Hinsicht vielerlei Gestalungsmöglichkeiten bestehen. So könnte die Führungsplatte 6 selbstverständlich durch sonstige Schienen oder Streben ersetzt sein. Auch die Montageplatten 4 und 5 können durch sonstige flächige Stützkonstruktionen ersetzt werden, wobei die Flächigkeit lediglich darauf abzielt, eine Krümmungsebene für die Schablonenteile zu definieren und einfache Veränderungen zu erlauben.

Gegenüber den Montageplatten 4 und 5 sind die Schablonenteile 2 und 3 mit Hilfe von nur schematisch dargestellten Stützen 13 verbunden, die im einfachsten Fall die Form von Stützwinkeln haben können, aber auch im Sinne einer einfachen und genauen Montage verschiedene Befestigungs- und Einstellmöglichkeiten bekannter Art vorsehen können. Um die Schablonenteile 2 und 3 gegenüber den Montageplatten 4 und 5 festzulegen, bedarf es jeweils zumindest zweier, etwa endseitig angeordneter Stützen, vorzugsweise wird jedoch eine Mehrzahl von Stützen vorgesehen werden, um die Formschablone zu stabilisieren.

Die Formschablone 1 ermöglicht es ferner, mit geringem Aufwand Änderungen in der herzustellenden Längsform, insbesondere in der Krümmung vorzusehen. In dieser Hinsicht kommt dem Umstand besondere Bedeutung zu, daß die Schablonenteile 2 und 3 im Sinne einer Längskrümmungsänderung biegsam gestaltet sind, so daß die Schablonenteile mehr oder weniger stark und auch über ihren Längsverlauf ungleichmäßig gekrümmt und in der so geschaffenen Stellung gegenüber den Montageplatten 4 und 5 festgelegt werden können. Hierzu ist zum einen ein elastisches Material von Vorteil. Insbesondere jedoch wird die Längsverformbarkeit durch in gleichmäßigen Abständen aufeinanderfolgende Quereinschnitte 14 bzw. 15 geschaffen, die vom Rand der Schablonenteile 2 und 3 in diese einspringen und lediglich einen dann gut verformbaren Rückenteil freibelassen. Diese Randeinschnitte werden je nach Krümmung bei dem innenliegenden Schablonenteil 2 mehr oder weniger aufgeweitet und bei dem außenliegenden Schablonenteil 3 zusammengedrückt, so daß hier Verformungen aufgenommen werden können, ohne daß das Profil selbst seine Formtreue einbüßt und sich etwa nach außen oder innen verwölbt, d. h., daß eine auf ein vorgegebenes Kunststoffprofil abgestimmte Schablone für dieses Profil weitgehend unabhängig von der angeforderten Krümmung verwendbar ist. Den einzelnen Anforderungen entsprechend, wie sie z. B. bei Fenstereinfassungen und Rahmen für Altbauten in wechselnder Form auftreten, wird die Änderung dann durch ein Versetzen der Stützen 12, 13 und entsprechender weiterer Stützen gleicher oder ähnlicher Art berücksichtigt, um die Schablone für einen neuen Formvorgang bereitzumachen.

Hinsichtlich der Ausgestaltung nach Fig. 1 ist zur Darstellung anzumerken, daß die horizontale Lage des (teilweise dargestellten) Schablonenbogens eine keineswegs bevorzugte Lage zu sein braucht, eine vertikale Anordnung mit einer gleichmäßigen Zugänglichkeit der Form und insbesondere des Spalts 9 wird in vielen Fällen vorzuziehen sein. Die schematisierte Darstellung ist auch lediglich als zur Veranschaulichung des Prinzips gedacht zu verstehen. In dieser Hinsicht sind auch bei 16 zwei Eingriffspunkte für Verbindungselemente eingezeichnet, die die Montageplatte 4 gegenüber der Führungsplatte 6 festlegen sollen, während die Montageplatte 5 ständig gegenüber der Führungsplatte 6 festgelegt sein kann.

Die Fig. 2 veranschaulicht noch in vergrößertem Maßstab die Lage der Schablonenteile 2 und 3 zueinander und deren Lage bezüglich eines im erweichten Zustand zu verformenden Profilstücks 17, das — wie die Darstellung charakterisiert — typischerweise mit dünnen Wänden und feinen Unterteilungen einen von Haus aus für eine Bogenverformung kritisches Formprodukt ist. Den sich daraus ergebenden besonderen Anforderungen wird zunächst einmal dadurch Rechnung getragen, daß der Profilquerschnitt eng zwischen den Schablonenteilen 2 und 3 geführt ist und dementsprechend wenig Raum zu einem unregelmäßigen Ausweichen hat.

Die Querschnittsdarstellung zeigt weiterhin, daß die mit einer Schnittschraffur kenntlich gemachten durchlaufenden Rückenbereiche 18, 19 einen relativ kleinen Teil des Querschnitts der Schablonenteile 2 bzw. 3 ausmachen, während die übrigen Querschnittsbereiche von den Quereinschnitten 14 bzw. 15 erfaßt werden. Daraus wird deutlich, daß der Querschnitt der Schablonenteile 2, 3 lediglich in den Rückenbereichen 18, 19 einer Verformung beim Krümmen und bei Krümmungsänderungen ausgesetzt wird, während die eigentlich das Profil tragenden Bereiche praktisch keiner Verformung unterliegen und somit ihren Sollquerschnitt behalten.

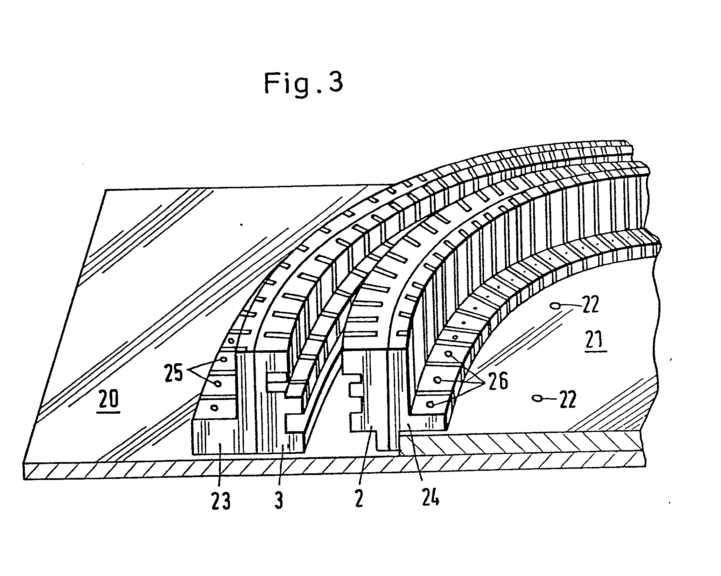

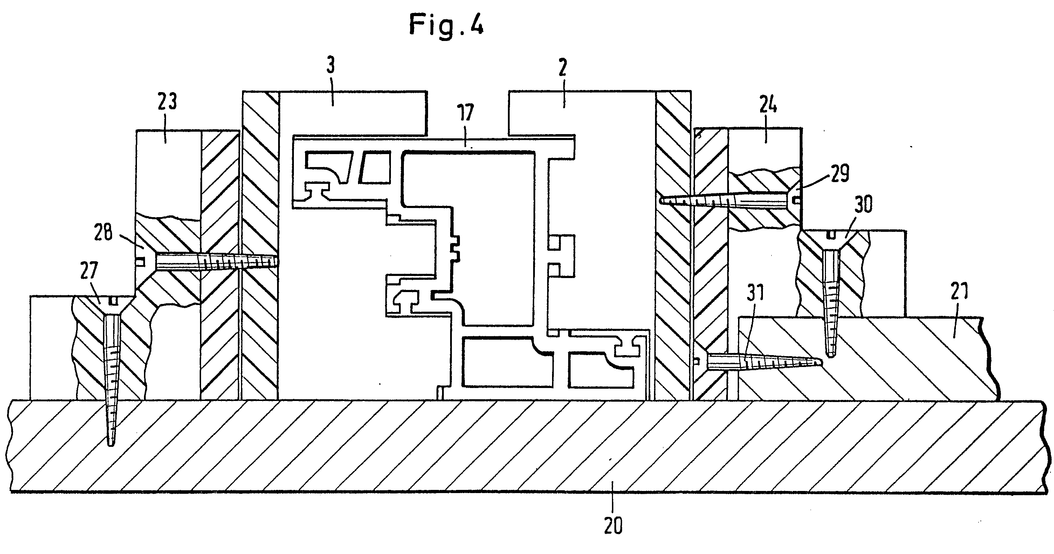

Die Figuren 3 und 4 zeigen eine Abwandlungsform der vorstehend beschriebenen Formschablone, bei der aber ganz entsprechende Schablonenteile 2 und 3 verwandt und auch mit gleichen Bezugsziffern gekennzeichnet sind. Die Schablonenteile 2 und 3 sitzen hier allerdings nicht auf zwei ebenflächigen, sondern auf aufeinanderliegenden Montageplatten 20 bzw. 21, von denen die obenliegende Platte 21 durch eine bogenförmige, zum Schablonenverlauf konzentrische Kante begrenzt ist. Die Platten — vorzugsweise Holzspanplatten — sind flächig gegeneinander verschiebbar und anhand von Stiften, Schrauber und dergl. durch Paßlöcher 22 hindurch in der Formstellung arretierbar. Diese Paßlöcher 22 werden beim Aufbau der Form frühzeitig vorgesehen, um eine exakte Zentrierung und Platten-Zuordnung zu erhalten.

Eine besonders einfache, gleichmäßige und auch verläßliche Abstützung der Schablonenteile 2 und 3 ergibt sich bei diesem Beispiel mit Hilfe zweier Stützschablonen 23 und 24, die — wie die Schablonenteile 2 und 3 — aus Kunststoff bestehen und auch mittels äquidistanter Einschnitte — in der Krümmungsebene betrachtet — kammförmig ausgebildet sind und sich somit auch ohne weiteres längs vorgegebener Krümmungslinien biegen lassen. Die Stützschablonen 23 und 24 haben im wesentlichen ein L-Profil, mit dem einerseits eine Anlage am Rücken der Schablonenteile 2 bzw. 3 und andererseits eine Anlage an der jeweiligen Montageplatte 20 bzw. 21 gewährleistet ist. Die Verbindung gegenüber der Montageplatte läßt sich in einfacher Weise durch Verschraubungen herstellen, wozu die Kammstege vorgearbeitete Montagelöcher 25 bzw. 26 besitzen. In Fig. 4 sind noch die hierzu verwandten Schrauben 27, 28, 29, 30 und 31 eingezeichnet, mit denen die Stützschablonen 23, 24 mit den Montageplatten 20, 21 und auch mit den Schablonenteilen 2, 3 verbunden sind.

Mit Hilfe dieser Stützschablonen 23 und 24 lassen sich also auf einfache Weise gleichmäßige Abstützungen erstellen, die sehr viel weniger Aufwand als die in Fig. 1 beispielsweise eingezeichneten Stützen 12, 13 oder gar sonst erforderliche Bogenformstützen, wie etwa aus mehrere Zentimeter starkem Holzspan-material ausgearbeiteten Bögen, erfordern. Dank der Formsteifigkeit der Stützen kann die Platte 21 als Spanplatte mäßiger Stärke (z. B. 19 mm) ausgeführt sein, die eine schnelle und leichte Bearbeitung erlaubt, und dennoch die Sicherung des Schablonenteils gegen Verlagerung, Längsverformung und Kippen durch die Stützschablone 24 gewährleistet.

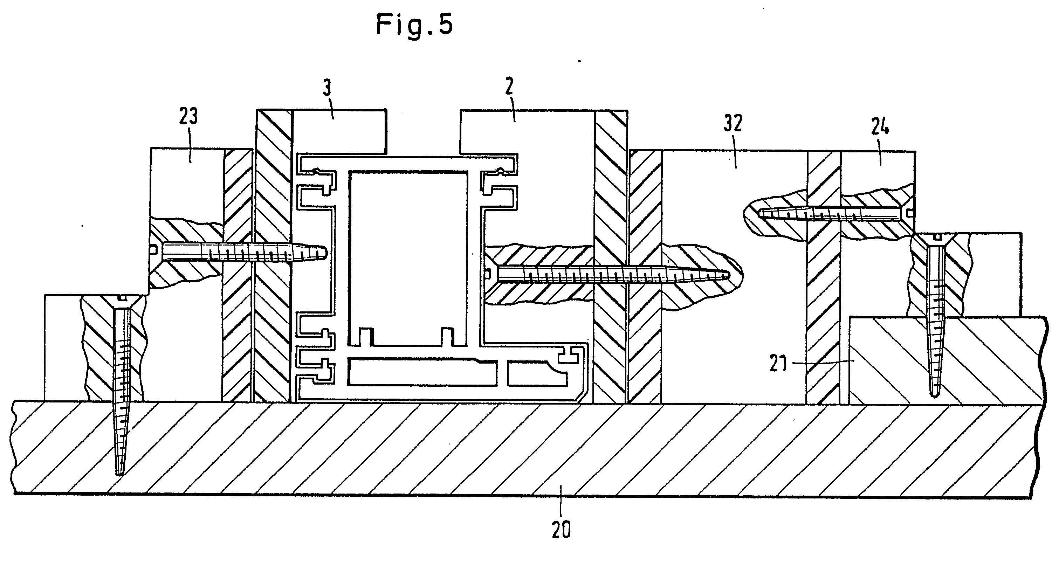

Die Fig. 5 zeigt eine weiterhin abgewandelte Ausführungsform, bei der angesichts der grundsätzlich übereinstimmenden Gestaltung aus den Figuren 1 bis 4 wieder entsprechende Teile mit entsprechenden Bezugzeichen versehen sind. Die wesentliche Änderung gegenüber der Ausführungsform nach Fig. 4 besteht hier darin, daß zwischen dem Schablonenteil 2 und der Stützschablone 24 ein Distanzstreifen 32 liegt, der mit einer Breite von z. B. 42 mm einen entsprechenden Abstand zwischen Schablonenteil 2 und Stützschablone 24 bewirkt. Mit solchen Distanzstreifen lassen sich grundsätzlich gewisse Radiusänderungen erzielen, um etwa eine bereits vorhandene Montageplatte 21 für einen begrenzt abweichenden Radius nochmals zu verwenden. In dieser Hinsicht können auch gestaffelte Distanzstreifen einen vorhandenen Satz von Montageplatten vielseitig einsetzbar machen.

Sehr viel bedeutsamer ist aber der Fall, daß bei Fensterflügeln zum einen der Blendrahmen und zum anderen der Flügelrahmen gebogen werden muß und zwischen beiden eine je nach Profil vorgegebene Radiusdifferenz besteht. Diese Radiusdifferenz läßt sich nun mit einem solchen Distanzstreifen berücksichtigen, indem der Distanzstreifen zum einen (für den Blendrahmen) der der innenliegenden Stützschablone und zum anderen (für den Flügelrahmen) der außenliegenden Stützschablone vorgelagert wird, so daß sich unter Verwendung gemeinsamer Schablonenelemente und -einstellungen eine einfache und exakte Arbeitsweise ergibt.

Die feste, aber lösbare Verbindung von Distanzstreifen, Schablonenteil und Stützschablone ist auch hier wieder durch Schrauben vorgesehen, die eine einfache, feste aber lösbare Verbindung schaffen und gerade in Kunststoff leicht einzubringen sind.

Der Distanzstreifen 32 ist vorzugsweise wieder aus Kunststoff hergestellt und hat auch wieder — wie die Schablonenteile 2, 3 und die Stützschablonen 23, 24 — eine durch von einer Seite eingearbeitete Quereinschnitte kammförmige Gestaltung, die trotz Querschnittsfestigkeit ein einfaches und gleichmäßiges Biegen seiner Längslinie erlaubt.

**Ansprüche**

1. Formschablone für im erweichten Zustand in Bögen umzuformende Kunststoff-Profile, insbesondere PVC-Fenster- und Rahmenhohlprofile, mit querschnittsstabilen konzentrisch zueinander angeordneten Schablonenteilen (2, 3) die jeweils zumindest bereichsweise der Profil-Außenkontur durch komplementäre Flächen angepaßt und zur Entnahme eines fertigen Profilbogens auseinanderbewegbar sind, dadurch gekennzeichnet, daß beide Schablonenteile (2, 3) im Sinne einer Längskrümmungsänderung biegsame jedoch in ihrer Arbeitsstellung fixierte Führungsformschienen (2, 3) sind, die aus gleitfähigem Material bestehen ; wobei die Schablonenteile (2, 3) zumindest an einer Längsseite zwischen einander einen Längsspalt (9) für den Durchgriff eines Ziehwerkzeugs freilassen.

2. Formschablone nach Anspruch 1, dadurch gekennzeichnet, daß die Schablonenteile (2, 3) kammartig mit durchlaufenden Rückenbereichen (18, 19) und durch quergerichtete, vom Rand zum Rücken einspringende Ausnehmungen (14, 15) unterbrochenen Flankenteilen ausgebildet sind.

3. Formschablone nach Anspruch 2, dadurch gekennzeichnet, daß die Ausnehmungen Quereinschnitte (14, 15) sind, die im Querschnitt jeweils nur einen relativ dünnen rückenseitigen Steg (18, 19) belassen.

4. Formschablone nach einem der Ansprüche 1 bis 3, dadurch gekennzeichnet, daß die Schablonenteile (2, 3) jeweils aus einstückigen Kunststoff-Profilsträngen bestehen.

5. Formschablone nach einem der Ansprüche 1 bis 4, dadurch gekennzeichnet, daß die Schablonenteile (2, 3) aus ultrahochmolekularem Niederdruck-Polyäthylen bestehen.

6. Formschablone nach einem der Ansprüche 1 bis 5, dadurch gekennzeichnet, daß die Schablonenteile (2, 3) auf jeweils einer von zwei Montageplatten (4, 5) angeordnet sind.

7. Formschablone nach Anspruch 6, dadurch gekennzeichnet, daß zumindest eine der Montageplatten (4, 5) mit in der Formstellung der Schablone arretierbaren Verbindungselementen (16) ausgestaltet ist.

8. Formschablone nach Anspruch 6 oder 7, dadurch gekennzeichnet, daß die Montageplatten (4, 5) Teil der Schablonen-Querschnittsform bilden.

9. Formschablone nach einem der Ansprüche 1 bis 8, dadurch gekennzeichnet, daß zumindest eines der Schablonenteile (2, 3) rückenseitig mit einer Stützschablone (23, 24) verbunden ist, die aus profiliertem, in der Krümmungsebene kammartig eingearbeitetem Kunststoffmaterial besteht.

10. Formschablone nach Anspruch 9, dadurch gekennzeichnet, daß die Stützschablone (23, 24) im wesentlichen L-förmig profiliert ist.

11. Formschablone nach Anspruch 9 oder 10, dadurch gekennzeichnet, daß die beiden Schablonenteile auf jeweils einer von zwei aufeinanderliegenden Platten (20, 21) angeordnet sind, von denen die obenliegende durch eine unter der Stützschablone liegenden Kante begrenzt ist.

12. Formschablone nach einem der Ansprüche 9 bis 11, dadurch gekennzeichnet, daß zumindest eines der beiden Schablonenteile (2, 3) über einen Distanzstreifen (32) mit einer der Stützschablonen (23, 24) verbunden ist.

13. Verfahren zur Umformung gerader Kunststoff-Profile insbesondere PVC-Fenster und Rahmenhohlprofile, in Bögen, bei dem Profilstücke durch chemische und thermische Einwirkung reversibel erweicht, danach einem Formvorgang unterzogen, bis zu einem zumindest teilweisen Wiedererhärten in der Form belassen und dann aus dieser entnommen werden, dadurch gekennzeichnet, daß das erweichte Profilstück für den Formvorgang in Profil-Längsrichtung mittels eines vorderenends an dem Profilstück angreifenden Zugwerkzeugs in eine der vorgegebenen Bogenform in Längskrümmung und Querschnitt angepaßte Formschablone gleitend eingezogen wird.

## Claims

1. A moulding template for plastics sections to be transformed into arcs in the softened state, particularly hollow PVC window and frame sections, comprising template members (2, 3) which are stable in cross-section and which are disposed concentrically with respect to one another and which are each adapted, at least locally, to the outside shape of the section by complementary surfaces and which can be moved apart for the extraction of a finished sectional arc, characterised in that the two parts (2, 3) of the template are guide moulding rails (2, 3) which are flexible in the sense that their longitudinal curvature can be altered but which are located in their working position, and which consists of a slippery material, the template members (2, 3) leaving free between them, at least at one longitudinal side, a longitudinal gap (9) through which a drawing tool can engage.

2. A moulding template as claimed in claim 1, characterised in that the template members (2, 3) are constructed in comb-like form with continuous back regions (18, 19) and flank portions which are interrupted by transversely directed recesses (14, 15) projecting inwards from the edge to the back.

3. A moulding template as claimed in claim 2, characterised in that the recesses are transverse incisions (14, 15) which, in cross-section leave only a relatively thin web (18, 19) at the back in each case.

4. A moulding template as claimed in any of claims 1 to 3 characterised in that the template members (2, 3) each consist of a one-piece plastics member.

5. A moulding template as claimed in any of claims 1 to 4, characterised in that the template members (2, 3) consist of ultrahigh molecular low-pressure polyethylene.

6. A moulding template as claimed in any of claims 1 to 5, characterised in that the template members (2, 3) are disposed on respective mounting plates (4, 5).

7. A moulding template as claimed in claim 6, characterised in that at least one of the mounting plates (4, 5) is formed with connecting elements (16) which can be locked in the moulding position of the template.

8. A moulding template as claimed in claim 6 or 7, characterised in that the mounting plates (4, 5) form part of the cross-sectional shape of the template.

9. A moulding template as claimed in any of claims 1 to 8, characterised in that at least one of the template members (2, 3) is connected, at the back, to a supporting template (23, 24) which consists of profiled plastics material worked, in a comb-like manner, into the plane of curvature.

10. A moulding template as claimed in claim 9, characterised in that the supporting template (23, 24) is profiled substantially in L-shape.

11. A moulding template as claimed in claim 9 or 10, characterised in that the two template members are each disposed on respective plates (20, 21) which are situated one on the other and of which the upper one is bounded by an edge situated below the supporting template.

12. A moulding template as claimed in any of claims 9 to 11, characterised in that at least one of the two template members (2, 3) is connected to one of the supporting templates (23, 24) by a spacing strip (32).

13. A method of transforming straight plastics sections, particularly hollow PVC window and frame sections, into arcs, wherein pieces of section are reversibly softened by chemical and thermal action, then subjected to a moulding operation, then left in the mould until they have at least partially hardened again and then are removed from the mould, characterised in that the softened piece of section is pulled, with sliding, into a moulding template adapted in longitudinal curvature and cross-section to the predetermined arcuate shape, by means of a drawing tool acting on the piece of section at the front end, for the moulding operation in the longitudinal direction of the section.

## Revendications

1. Gabarit de formage pour des profilés en matière plastique à cintrer à l'état ramolli, en particulier des profilés creux de châssis et de fenêtres en PVC, comportant des parties de gabarit de formage (2, 3) stables en coupe transversale et disposées concentriquement l'une à l'autre qui sont adaptées au moins par zone au contour extérieur du profilé par des surfaces complémentaires, et qui peuvent être écartées l'une de l'autre pour l'enlèvement d'un profilé cintré fini, caractérisé en ce que les deux parties (2, 3) du gabarit de formage sont des rails de formage et de guidage (2, 3) fixés dans leur position de travail, mais flexibles en vue d'une modification de la courbure longitudinale, qui sont faits d'une matière favorisant le glissement, ces parties (2, 3) du gabarit de formage réservant au moins sur un côté longitudinal un interstice longitudinal (9) entre elles pour le passage d'un outil de traction.

2. Gabarit de formage suivant la revendication 1, caractérisé en ce que les parties (2, 3) du gabarit de formage ont la forme de peignes comportant des zones dorsales continues (18,19) et des parties de flanc interrompues par des évidements (14, 15) orientés transversalement et s'enfonçant à partir du bord vers le dos.

3. Gabarit de formage suivant la revendication 2, caractérisé en ce que les évidements sont des encoches transversales (14, 15) qui ne laissent subsister chaque fois qu'une lame dorsale de section relativement mince (18, 19).

4. Gabarit de formage suivant l'une quelconque des revendications 1 à 3, caractérisé en ce que les parties (2, 3) du gabarit de formage sont faites chaque fois d'une barre profilée en matière plastique d'une seule pièce.

5. Gabarit de formage suivant l'une quelconque des revendications 1 à 4, caractérisé en ce que les parties (2, 3) du gabarit sont faites de polyéthylène basse pression de poids moléculaire ultra élevé.

6. Gabarit de formage suivant l'une quelconque des revendications 1 à 5, caractérisé en ce que les parties (2, 3) du gabarit de formage sont montées chacune sur l'une de deux plaques de montage (4, 5).

7. Gabarit de formage suivant la revendication 6, caractérisé en ce qu'au moins une des plaques de montage (4, 5) est équipée d'éléments d'assemblage (16) pouvant être bloqués dans la position de formage du gabarit.

8. Gabarit de formage suivant la revendication 6 ou 7, caractérisé en ce que les plaques de montage (4, 5) font partie de la forme en coupe du gabarit.

9. Gabarit de formage suivant l'une quelconque des revendications 1 à 8, caractérisé en ce qu'au moins une des parties (2, 3) du gabarit de formage est reliée par sa partie dorsale à un gabarit d'appui (23, 24) qui est fait d'une matière plastique profilée usinée en peigne dans le plan de courbure.

10. Gabarit de formage suivant la revendication 9, caractérisé en ce que le gabarit d'appui (23, 24) est essentiellement profilé en L.

11. Gabarit de formage suivant la revendication 9 ou 10, caractérisé en ce que les deux parties du gabarit de formage sont disposées chaque fois sur l'une de deux plaques (20, 21) superposées, parmi lesquelles la plaque supérieure est limitée par un bord se trouvant en dessous du gabarit d'appui.

12. Gabarit de formage suivant l'une quelconque des revendications 9 à 11, caractérisé en ce qu'au moins une des deux parties (2, 3) du gabarit de formage est reliée par l'intermédiaire d'une barre d'espacement (32) à un des gabarits d'appui (23, 24).

13. Procédé pour déformer des profilés en matière plastique droits en particulier des profilés creux de châssis et de fenêtres en poly (chlorure de vinyle) en des éléments cintrés, suivant lequel le profilé est ramolli de manière réversible par des moyens chimiques et thermiques, puis est soumis à une opération de formage, est laissé dans le gabarit au moins jusqu'à un redurcissement partiel et est ensuite enlevé du gabarit, caractérisé en ce que pour l'opération de formage, le profilé ramolli est tiré par glissement dans le sens de sa longueur au moyen d'un outil de traction attaquant l'extrémité antérieure du profilé dans un gabarit de formage adapté, quant à sa courbure longitudinale et à sa section, à la forme cintrée préétablie.

## Fig.1

## Fig.2

# Fig.3

# Fig.4

0 041 154

Fig.5